# EUROPÄISCHE PATENTANMELDUNG

(11) **EP 3 029 269 A1**
(43) Veröffentlichungstag der Anmeldung: **08.06.2016**
(21) Anmeldenummer: 14196372.8
(22) Anmeldetag: 04.12.2014
(51) Int. Cl.: F01D 5/14, F01D 5/22

(54) **TURBINENLAUFSCHAUFEL, ZUGEHÖRIGER ROTOR UND STRÖMUNGSMASCHINE**

(71) Anmelder: Siemens Aktiengesellschaft, 80333 München (DE)
(72) Erfinder: Frantzheld, Robert, 13591 Berlin (DE); Grodzki, Jacek, 14089 Berlin (DE); Hesse, Holger, 13629 Berlin (DE); Kamenzky, Susanne, 10713 Berlin (DE); Maiz, Khaled, 13355 Berlin (DE); Mertens, Dirk, 13189 Berlin (DE); Pipke, Romina, 10777 Berlin (DE); Scheu, Eva, 12051 Berlin (DE); Wiemann, Eric, 13589 Berlin (DE)

(57) **Zusammenfassung**

Eine Turbinenlaufschaufel (120) für eine Strömungsmaschine (100) mit einem Befestigungsbereich (154) und einer sich daran anschließenden Plattform (152), an der ein im Querschnitt profiliertes Schaufelblatt (144) angeordnet ist, welches an einer Schaufelspitze endet, soll einen besonders hohen Wirkungsgrad der Strömungsmaschine bei besonders langer Lebensdauer ermöglichen. Dazu ist am Schaufelblatt (144) ein aerodynamisches Element (160) angeordnet, dessen im Betrieb der Strömungsmaschine (100) erzeugte aerodynamische Triebkraft der im Betrieb der Strömungsmaschine (100) auftretenden Fliehkraft entgegenwirkt.

## Beschreibung

Die Erfindung betrifft eine Turbinenlaufschaufel für eine Strömungsmaschine mit einem Befestigungsbereich und einem sich daran anschließenden, an der ein im Querschnitt profiliertes Schaufelblatt angeordnet ist, welches an einer Schaufelspitze endet.

Turbinenlaufschaufeln der oben genannten Art dienen in Strömungsmaschinen zur Umwandlung der Energie eines heißen Gasstroms in rotatorische Energie. Sie weisen typischerweise ein von Hohlräumen zur Führung von Kühlluft durchzogenes Schaufelblatt auf, das an einer so genannten Plattform befestigt ist. An die Plattform schließt sich ein Befestigungsbereich zur Befestigung der Turbinenschaufel am Rotor der Strömungsmaschine an.

Turbinenlaufschaufeln werden derzeit gusstechnisch aus einem Stück und einem Werkstoff hergestellt. Dies erfolgt in der Regel im Vakuumfeingussverfahren. Im Zuge der weiteren Wirkungsgradverbesserung insbesondere aktueller Gasturbinen insbesondere durch die Verlängerung der Schaufelblätter hat sich jedoch herausgestellt, dass bei in diesem Verfahren hergestellten Turbinenlaufschaufeln Stabilitätsprobleme auftreten, da im Betrieb hohe Fliehkräfte bei hohen Temperaturen auf die Turbinenlaufschaufeln wirken.

Es ist daher Aufgabe der Erfindung, eine Turbinenlaufschaufel der eingangs genannten Art anzugeben, die einen besonders hohen Wirkungsgrad der Strömungsmaschine bei besonders langer Lebensdauer ermöglicht.

Diese Aufgabe wird erfindungsgemäß gelöst, indem am Schaufelblatt ein aerodynamisches Element angeordnet ist, dessen im Betrieb der Strömungsmaschine erzeugte aerodynamische Triebkraft der im Betrieb der Strömungsmaschine auftretenden Fliehkraft entgegenwirkt.

Die Erfindung geht dabei von der Überlegung aus, dass ausgehend vom derzeitigen Stand der Technik eine Erhöhung des Wirkungsgrades insbesondere durch eine Verlängerung der Turbinenlaufschaufeln in der Turbine möglich wäre. Hierbei stößt die Auslegung insbesondere der vierten Turbinenlaufschaufelstufe bei Gasturbinen an fertigungstechnische Grenzen: Die Laufschaufel soll eine eingangs beschriebene Innenstruktur besitzen und aktiv gekühlt werden, gleichzeitig soll die Laufschaufel aber länger werden, um die geforderten Leistungs- und Wirkungsgradsteigerungen zu erzielen. Eine Vergrößerung der Schaufel würde jedoch auch ein zu einem höheren Gewicht führen, wodurch die Fliehkräfte größer würden als die Schaufel aushalten kann. Eine Reduzierung des Gewichts der Schaufel zur Reduzierung der Fliehkräfte ist jedoch fertigungstechnisch vergleichsweise schwierig. Daher wird vorgeschlagen, anstatt einer Reduzierung der Fliehkräfte einen Ausgleich durch Aufbringen von den Fliehkräften entgegenwirkenden Kräften zu erreichen. Hierzu sind aerodynamische Elemente, d. h. Elemente, die bei der betriebsgemäßen Bewegung der Laufschaufel durch ihre äußere Form eine resultierende Triebkraft erzeugen, auf dem Schaufelblatt angeordnet. Diese sind so geformt und angeordnet, dass ihre Triebkraft der Fliehkraft im Betrieb entgegenwirkt, d. h. in Richtung der Achse des Rotors wirkt.

Vorteilhafterweise ist das aerodynamische Element in der schaufelspitzenseitigen Hälfte des Schaufelblatts angeordnet, d. h. an dem Teil des Schaufelblatts, der am weitesten Außen am Rotor anliegt. Die durch das aerodynamische Element erzeugte Triebkraft greift nämlich am Ansatzpunkt des Elements auf dem Schaufelblatt an. Da die Fliehkraft mit zunehmendem Abstand von der Achse des Rotors ansteigt, wird hierdurch erreicht, dass die Triebkraft auch dort angreift, wo die Fliehkräfte im Betrieb am größten sind.

Das aerodynamische Element steht weiterhin vorteilhafterweise im Wesentlichen senkrecht auf der Oberfläche des Schaufelblatts. Hierdurch erstreckt sich das aerodynamische Element am weitesten in die Luftumströmung des Schaufelblatts hinein und mit geringerem materialseitigem Aufwand und Gewicht können stärkere Triebkräfte in Richtung der Achse erzeugt werden.

In vorteilhafter Ausgestaltung weist das aerodynamische Element ein Tragflächenprofil auf. Es ist also ähnlich einer Flugzeugtragfläche geformt, d. h. als Profil mit einer Profilnase, Profilhinterkante und einer Druckseite und einer gewölbten Saugseite, die Nase und Hinterkante verbinden und eine unterschiedliche Länge haben, so dass durch die Druckunterschiede auf Druckseite und Saugseite eine Triebkraft bei der Umströmung erzeugt wird.

Vorteilhafterweise ist eine Profilwölbung dabei auf der der Plattform zugewandten Seite des Tragflächenprofils angeordnet. Die Profilwölbung führt bei einem Tragflächenprofil zu einer größeren Strecke für die Gasströmung oberhalb der Wölbung. Dadurch entsteht hier ein geringere Druck und damit über das gesamte Profil eine resultierende Kraft in Richtung der Senkrechten auf der gewölbten Fläche. Ist das Profil parallel zur Plattform, d. h. tangential zur Achse der Strömungsmaschine angeordnet und diese Wölbung auf der der Plattform zugewandten Seite des Tragflächenprofils angeordnet, so entsteht eine Kraft in Richtung der Plattform, d. h. zur Achse hin. Diese wirkt der Fliehkraft entgegen.

In weiterer vorteilhafter Ausgestaltung erstreckt sich das aerodynamische Element in Richtung einer benachbarten Laufschaufel und weist an seiner Spitze eine Kontaktierungsfläche auf. Es kann damit in der Art einer Doppelnutzung auch als Schwingungsdämpfer verwendet werden und ist dafür geeignet ausgebildet. Derartige Schwingungsdämpfer sind grundsätzlich bekannt, sie erstrecken sich von zwei benachbarten Schaufelblättern zueinander hin und berühren sich an ihren Spitzen nahezu. So wird eine Bewegung des Schaufelblatts beschränkt und übermäßige Schwingungen der Schaufeln werden unterbunden. Das aerodynamische Element sollte in der gleichen Weise aufgebaut sein. Dadurch kann es sowohl Schwingungen der Laufschaufeln dämpfen als auch der Fliehkraft auf die Laufschaufel entgegenwirken.

Ein Rotor für eine Strömungsmaschine umfasst vorteilhafterweise eine beschriebene Turbinenlaufschaufel.

Eine Strömungsmaschine umfasst vorteilhafterweise einen derartigen Rotor.

Die mit der Erfindung erzielten Vorteile bestehen insbesondere darin, dass durch die Anbringung aerodynamisch wirksamer Features am Schaufelblatt eine im Betrieb der Strömungsmaschine durch die Umströmung der Laufschaufeln erzeugte aerodynamische Triebkraft entsteht, die entgegen der Fliehkraft, die auf die Laufschaufel wirkt, gezielt ausgerichtet werden kann. Dadurch ist es möglich, größere und längere Laufschaufeln zu verwenden, wodurch die Leistung und der Wirkungsgrad der Strömungsmaschine gesteigert werden können. Derartige Laufschaufeln sind bei allen Strömungsmaschinen verwendbar.

Ausführungsbeispiele der Erfindung werden anhand einer Zeichnung näher erläutert. Darin zeigen:
- FIG 1: einen teilweisen Längsschnitt durch eine Gasturbine,
- FIG 2: eine Laufschaufel mit Schwingungsdämpfer gemäß dem Stand der Technik,
- FIG 3: eine Laufschaufel mit Schwingungsdämpfer und aerodynamischem Element, und
- FIG 4: eine Laufschaufel mit aerodynamischem Element als Schwingungsdämpfer.

Gleiche Teile sind in allen Figuren mit denselben Bezugszeichen versehen.

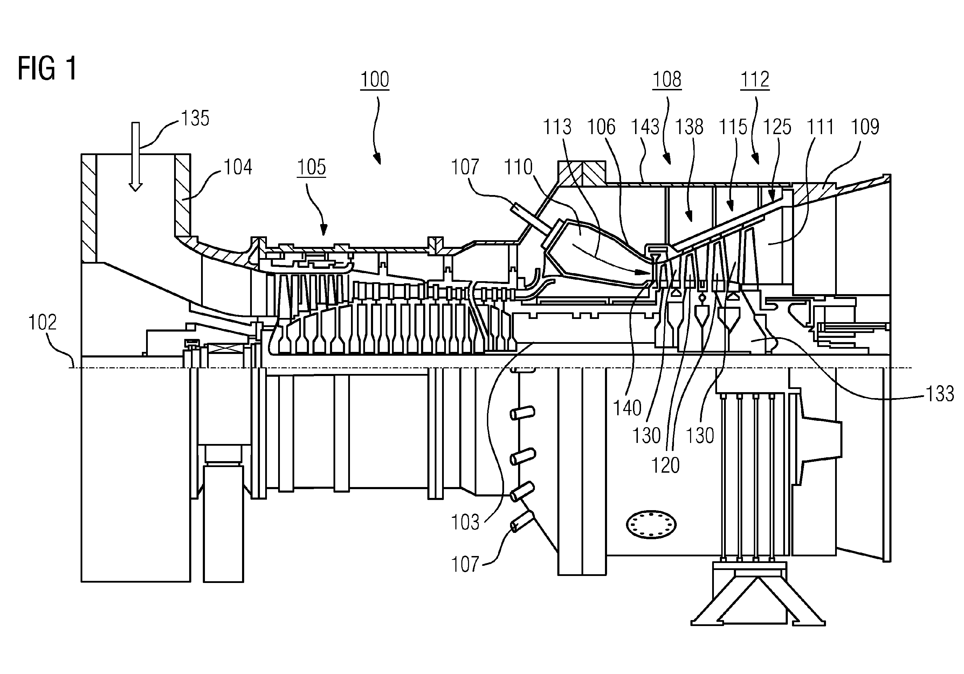

Die FIG 1 zeigt eine Gasturbine 100 als Beispiel einer Strömungsmaschine in einem Längsteilschnitt. Eine Turbine ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise ZrO2, Y2O4-ZrO2) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

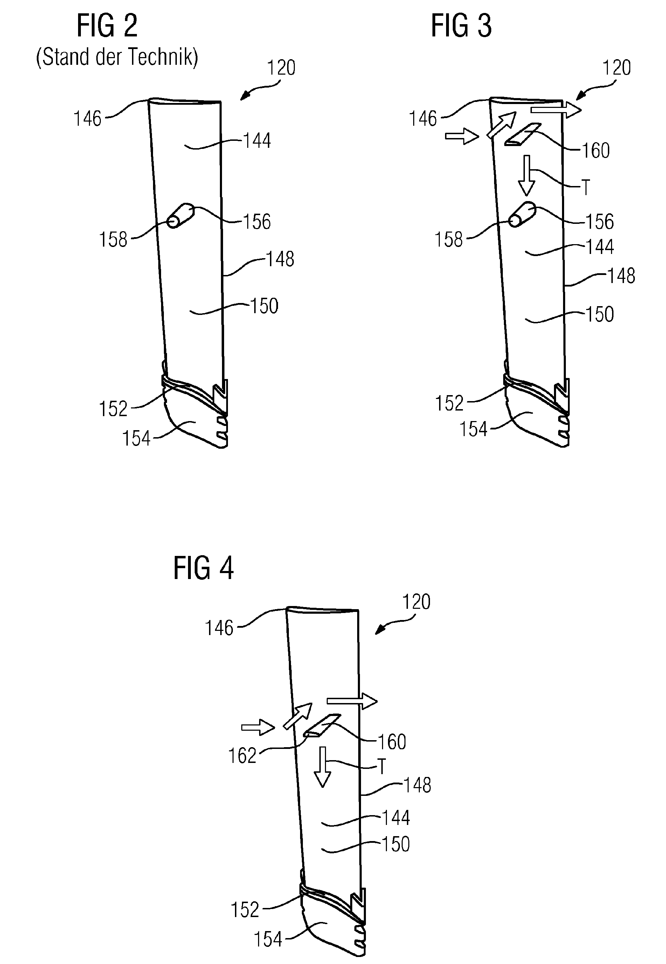

Jede Leitschaufel 130 weist einen auch als Plattform bezeichneten, dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel 120 einen derartigen Laufschaufelfuß auf, wie in der folgenden FIG 2 noch dargestellt wird, endet jedoch in einer Laufschaufelspitze.

In FIG 2 ist eine solche Laufschaufel 120 gezeigt, wie sie aus dem Stand der Technik bekannt ist. Die Laufschaufel 120 weist zunächst ein gerades Schaufelblatt 144 auf. Das Profil des Schaufelblatts 144 ähnelt dem einer Flugzeugtragfläche. Es weist eine abgerundete Profilnase 146 und eine Profilhinterkante 148 auf. Zwischen Profilnase 146 und Profilhinterkante 148 erstrecken sich die (in FIG 2 rückseitige) konkave Druckseitenwand und die konvexe Saugseitenwand 150 der Laufschaufel 120.

An das Schaufelblatt 144 schließt sich der Laufschaufelfuß an, der auch als Plattform 152 bezeichnet wird. Die Plattform 152 dient der Abdichtung des Rotors 103 gegen das Heißgas, welches die Laufschaufel 120 umströmt. An die Plattform 152 schließt sich der Befestigungsbereich 154 an. Dort sind Profilierungen angebracht, mittels derer die Laufschaufel 120 am Rotor 103 in einer tannenbaumartigen Nut-Feder-Verbindung fixiert wird.

Sowohl an der Druckseitenwand (nicht gezeigt) als auch an der Saugseitenwand 150 sind Schwingungsdämpfer 156 angeordnet. Diese haben im Ausführungsbeispiel eine kegelstumpfartige Form mit steilen, fast zylindrischen Seitenflächen. Sie erstrecken sich im Wesentlichen senkrecht zur Druckseitenwand bzw. Saugseitenwand 150 nach außen. An ihrer Spitze weisen sie eine Kontaktierungsfläche 158 auf. Die Schwingungsdämpfer 156 sind dabei etwa auf halber Länge des Schaufelblatts 144 angeordnet.

Zweck der Schwingungsdämpfer 156 ist es, eine übermäßige, durch Schwingungen im Betrieb der Gasturbine 100 verursachte Bewegung der Laufschaufel 120, insbesondere des Schaufelblatts zu verhindern. Hierzu erstrecken sich die Schwingungsdämpfer 156 zum Schaufelblatt der benachbarten Laufschaufel 120 hin, wo aufgrund der identischen Ausprägung aller Laufschaufeln 120 einer Turbinenstufe 112 ein ebensolcher Schwingungsdämpfer 156 angeordnet ist. Bewegen sich die Schaufelblätter aufeinander zu, stoßen die Schwingungsdämpfer 156 aneinander, eine weitere Bewegung wird so unterbunden.

FIG 2 zeigt beispielhaft eine bestimmte Außenform von Schwingungsdämpfern 156, wie sie dem Fachmann bekannt sind. Unterschiedliche Ausformungen von Schwingungsdämpfern 156 sind natürlich möglich.

Um Leistung und Wirkungsgrad der Gasturbine 100 zu steigern, sollen die Laufschaufeln 120 länger als bisher ausgebildet sein und höhere Drehzahlen und Gasmassenströme aushalten können. Die dabei auftretenden Fliehkräfte werden durch aerodynamische Elemente 160 teilkompensiert, die in den folgenden FIG 3 und 4 dargestellt sind. Diese werden jeweils anhand ihrer Unterschiede zu den jeweils vorhergehenden Figuren erläutert.

In FIG 3 ist im Bereich der Schaufelspitze der Laufschaufel 120, in einem Abstand zur Schaufelspitze der etwa 10% der Gesamtlänge des Schaufelblatts 144 entspricht, ein aerodynamisches Element 160 angeordnet. Das aerodynamische Element 160 hat etwa die Form einer Flugzeugtragfläche, sein Profil weist also ebenso eine Profilnase und -hinterkante sowie diese verbindende Druck- und Saugseite auf. Die Saugseite ist dabei nach außen gewölbt, die Druckseite kann flach ausgebildet sein. Seine Länge entspricht etwa der Länge des Schwingungsdämpfers 156, ebenso seine Breite. Das aerodynamische Element 160 steht senkrecht auf dem Schaufelblatt 144. Seine Profilnase ist ebenso wie die Profilnase 146 der Laufschaufel in Richtung des Eintritts der Gasturbine 100 ausgerichtet.

Die nach außen gewölbte Saugseite weist in Richtung der Plattform 152.

Durch die Gasumströmung im Betrieb der Gasturbine 100 erzeugt das aerodynamische Element 160 eine Triebkraft T, die in Richtung der Plattform 152 zeigt und damit die Fliehkraft zumindest teilweise kompensiert.

In der alternativen Ausführungsform gemäß FIG 4 ist das aerodynamische Element 160 an die Stelle des Schwingungsdämpfers 156 gerückt. Das aerodynamische Element 160 weist an seiner Außenseite eine Kontaktierungsfläche 162 auf. Da es in etwa die Außenmaße des Schwingungsdämpfers 156 aus FIG 3 aufweist, dient es somit neben dem Zweck der Teilkompensation der Fliehkraft auch als Schwingungsdämpfer. Hierdurch ist nur ein seitliches Bauteil am Schaufelblatt anzubringen, welches beide Aufgaben erfüllt.

## Patentansprüche

1. Turbinenlaufschaufel (120) für eine Strömungsmaschine (100) mit einem Befestigungsbereich (154) und einer sich daran anschließenden Plattform (152), an der ein im Querschnitt profiliertes Schaufelblatt (144) angeordnet ist, welches an einer Schaufelspitze endet,
wobei am Schaufelblatt (144) ein aerodynamisches Element (160) angeordnet ist, dessen im Betrieb der Strömungsmaschine (100) erzeugte aerodynamische Triebkraft der im Betrieb der Strömungsmaschine (100) auftretenden Fliehkraft entgegenwirkt.

2. Turbinenlaufschaufel (120) nach Anspruch 1,
bei der das aerodynamische Element (160) in der schaufelspitzenseitigen Hälfte des Schaufelblatts (144) angeordnet ist.

3. Turbinenlaufschaufel (120) nach einem der vorhergehenden Ansprüche,
bei der das aerodynamische Element (160) im Wesentlichen senkrecht auf der Oberfläche des Schaufelblatts (144) steht.

4. Turbinenlaufschaufel (120) nach einem der vorhergehenden Ansprüche,
bei der das aerodynamische Element (160) ein Tragflächenprofil aufweist.

5. Turbinenlaufschaufel (120) nach Anspruch 4,
bei der eine Profilwölbung auf der der Plattform (152) zugewandten Seite des Tragflächenprofils angeordnet ist.

6. Turbinenlaufschaufel (120) nach einem der vorhergehenden Ansprüche,
bei der sich das aerodynamische Element (160) in Richtung einer benachbarten Laufschaufel (120) erstreckt und an seiner Spitze eine Kontaktierungsfläche (162) aufweist.

7. Rotor (103) für eine Strömungsmaschine (100),
umfassend eine Turbinenlaufschaufel (120) nach einem der vorhergehenden Ansprüche.

8. Strömungsmaschine (100) mit einem Rotor (103) nach Anspruch 7.
